# EUROPEAN PATENT APPLICATION

(11) **EP 1 923 212 A2**
(43) Date of publication of application: **21.05.2008**
(21) Application number: 07120465.5
(22) Date of filing: 12.11.2007
(51) Int. Cl.: B32B 29/00, B32B 27/10

(54) **Double-layer packing paper**

(30) Priority: 13.11.2006 IT FI20060279
(71) Applicant: Papeschi, Goffredo, 55060 Vorno (IT)
(72) Inventor: Papeschi, Goffredo, 55060 Vorno (IT)
(74) Representative: Gervasi, Gemma

(57) **Abstract**

There is described a packing paper, specifically for food products, which allows to see what is packed therein.

## Description

### Field of the invention

The present invention relates to the field of packing papers, and specifically to papers intended for use with foods.

### State of the art

Packing papers consisting of a sheet (hereinafter named also 'supporting sheet') coupled to a polymeric material film or the like which increases the strength thereof, especially towards moist or wet products, are widely known.

These papers are obtained by coupling the supporting material sheet and the polymeric material film wherein the adherence between said two materials is ensured, for example, by glues suitable for the purpose. The products, specifically food products, are generally placed and then wrapped into the part of the sheet consisting of the polymeric film.

For attractive needs or advertising reasons, decorative drawings or advertising motifs (for example the dealer's trademark) are often printed onto the packing papers of the aforesaid type, obviously on the supporting sheet to prevent as much as possible the ink from coming into contact with the contents when the sheet will be wrapped.

Therefore, as a result, while the polymeric sheet is generally transparent, the supporting sheet is generally opaque whereby it is impossible to see what is contained in the packing paper once the package has been closed.

Therefore, when several packages containing different products are commonly stored (for example in a refrigerator, a pantry or the like), they need to be all opened when they come to being used to find the desired one.

In order to avoid this drawback, Utility Model ES-U-1 030 246 describes and claims a packing paper consisting of a transparent sheet onto which two longitudinal bands of opaque material are made to adhere so as to leave a narrow transparent line between said two bands, through which it is possible to see inside the package.

However, this solution presents two drawbacks; in fact, given the different consistency between the opaque sheet and the transparent one, the transparent band tends to crease and the manufacturing of a packing sheet of this type is further complicated and expensive, also because it requires the use of polymeric films having a certain thickness to precisely avoid the problems of creasing.

### Object of the invention

The present invention allows to overcome the aforesaid problems in virtue of a packing paper in which the (opaque) supporting sheet which adheres to the (transparent) polymeric film is perforated, i.e. presents a series of openings which allow to see what is contained inside the package in virtue of the transparency of the polymeric sheet which, by adhering to the supporting sheet, however closes said openings.

### Brief description of the figures

Figure 1 shows a packing paper according to the invention.
Figure 2 shows a specific embodiment of the invention.

### Detailed description of the invention

The present invention allows to overcome the drawbacks due to the opacity of the packing papers (specifically those for food) in virtue of a double-layer packing paper consisting of an opaque layer (supporting sheet) 10 and another transparent layer 11, adherent to the former, wherein said opaque layer presents a series of holes closed by the transparent sheet adhering thereto.

According to the invention, the supporting sheet consists of one of the opaque materials generally used for forming double-layer packing sheets.

Examples of said materials are: paper, polythene, polyethylene, polypropylene, maize derivates, degradable filmed alcohols, aluminium, TNT, etc.

The transparent material sheet will also be formed by the materials generally used for this purpose, such as, for example: polythene, polypropylene, polyethylene and other similar films for foods.

If preferred, according to a specific embodiment of the invention, films considerably thinner (for example with a thickness between 5 and 12 microns) than those generally employed can be used as transparent material, because the solution suggested by the invention avoids the problems of creasing as mentioned above.

The perforated supporting sheet allows to view what is on the other side of the sheet.

The holes 12 may be of any desired shape, arranged on one or more parallel rows or possibly distributed on the entire surface of the supporting sheet, either randomly or symmetrically, or so as to reproduce a preferred image.

The processes and the materials (specifically the glues) for manufacturing packing papers according to the invention are those known and applied for the preparation of double-layer papers of the known type, except that perforated sheets being used as supporting sheets, as described.

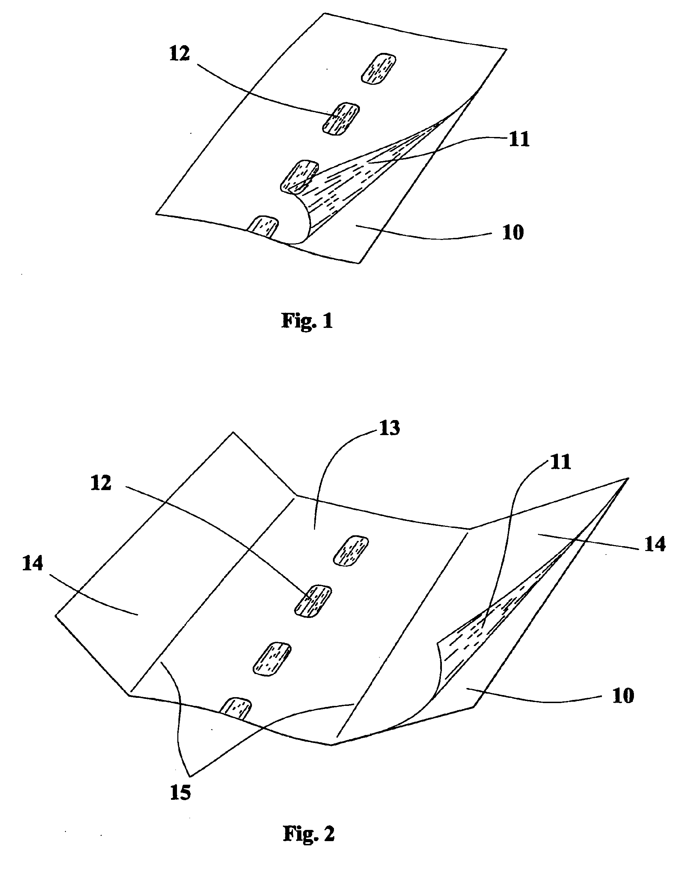

According to a particular embodiment, the packing papers according to the invention present two folds 15 which divide the sheet into three parts: a middle part 13 and two side wings 14. Said wings 14 may be either symmetric, and thus mating in the middle of the middle part 13 once folded thereon, or asymmetric (as shown more in detail in figure 2) in order to allow them to at least partially overlap when they are folded onto the middle part.

Obviously, if preferred, the wings 14, either reciprocally symmetric or asymmetric as described above, may be sized so as to leave a certain space between them without neither mating nor overlapping.

In the aforesaid case, the holes 12 may be present either on the middle part, or on one or both the wings, or on all three of these parts, as preferred.

According to a further particular embodiment of the invention, the holes 12 may be made on a packing paper in which the polymeric material film overlaps a supporting sheet so that said polymeric material film protrudes from two opposite sides of the supporting sheet constituting two wings, made only of polymeric film, external to the supporting sheet and foldable thereon. Also in this case, the two wings may be either reciprocally symmetric or asymmetric, and may either overlap or not when folded onto themselves.

The holes will be obviously made on the supporting sheet and then closed by the application of the polymeric material film.

Furthermore, according to a further particular embodiment of the invention, a continuous or discontinuous strip of glue of the removable type (like that used for adhesive memo notes) may be applied onto the surface of the opaque sheet (supporting sheet), so as to facilitate holding the edges when the object is to be wrapped.

This solution is particularly advantageous when a packing paper with overlappable or partially overlappable wings is used, in fact in this case the paper may be kept, until it is used, with the wings closed and the layer of glue, present on one wing, the shorter one in general, will be automatically protected by the opposite wing folded thereon.

In the case of packing papers either without wings or with non-overlappable wings, the layer of glue needs obviously to be protected by a layer of film to be removed when they have to be used.

Obviously, the strip of glue as described above may also be applied to traditional packing sheets of any type (single-layer, double-layer, multi-layer) and material (paper, polymer, cardboard, tissue-paper, etc.) facilitating the tightness of the wrapping; also in this case, if preferred, the strip of glue may be protected by a layer of protective material to be removed when it comes to being used.

The packing paper according to the present invention may be packaged either in pre-cut sheets of the desired size, to be preferably preserved stacked in appropriated containers (for example cardboard boxes), or in rolls of any width and length from which the sheets of the desired size may be cut, or finally in rolls consisting of pre-cut sheets to be torn off when they have to be used.

According to a specific embodiment of the invention, the transparent polymeric material sheet applied to the opaque supporting sheet consists of a sheet of degradable or biodegradable polymer, where this term indicates the commercially available products having such properties, such as for example, polylactic-acid-based polymers, for example PLA^{©}, or starch-based polymers, such as for example Mater-Bi^{©}, or PHA-based polymers, such as Biomer^{©} or Biopol^{©}.

Obviously, in this case, the polymeric biodegradable sheet as defined above will be preferably coupled to an opaque layer of biodegradable material, for example paper or dry paper (AIR-LAID), so that the packing paper according to the invention is biodegradable as a whole with evident advantages as far as its disposal after use is concerned.

## Claims

1. A double-layer packing paper having an opaque layer and a transparent layer, adherent to the former, wherein said opaque layer presents a series of holes closed by the transparent sheet adhering thereto.

2. A packing paper according to claim 1, wherein said opaque layer (10) consists of a sheet of opaque material commonly used for forming double-layer packing sheets.

3. A packing paper according to claim 2, wherein said opaque material is chosen from: paper, polythene, polyethylene, polypropylene, maize derivates, degradable filmed alcohols, aluminium, TNT.

4. A packing paper according to claim 1 wherein said transparent layer (11) consists of a sheet or film of transparent material commonly used for forming double-layer packing sheets.

5. A packing paper according to claim 4, wherein said transparent material is chosen from: polythene, polypropylene, polyethylene and other similar films for foods.

6. A packing paper according to claims 4-5, wherein said transparent material sheet or film has a thickness between 5 and 12 microns.

7. A packing paper according to claims 1-6, wherein said holes (12) may be of any desired shape, either arranged on one or more parallel rows, or possibly distributed on the entire surface of the supporting sheet either randomly or symmetrically, or so as to reproduce a preferred image.

8. Packing papers according to claims 1-7, wherein said papers present a middle part (13) and two side wings (14) either symmetric and mating once folded onto the middle body, or asymmetric so as to at least partially overlap when they are folded onto the middle body.

9. Packing papers according to claim 8, wherein said either reciprocally symmetric or asymmetric wings (14) are sized so as to leave a certain space between them without neither mating nor overlapping once folded on the middle body.

10. Packing papers according to claims 8 and 9, wherein the holes (12) may be present either on the middle part (13) or on one or both of the wings (14), or on all three of these parts, as preferred.

11. Packing papers according to claim 1 consisting of a polymeric material film overlapping a supporting sheet so that said polymeric material film protrudes from two opposite sides of the supporting sheet thus forming two wings external to the supporting sheet and foldable thereon, and wherein the two wings are reciprocally symmetric or asymmetric and sized so as to either overlap or not, once folded onto themselves, and wherein the holes (12) are made on the supporting sheet and then closed by the polymeric film applied thereon.

12. Packing papers according to claims 1-11, wherein an either continuous or discontinuous strip of glue of the removable type is applied onto the surface of the opaque sheet.

13. A packing paper according to claim 12, wherein said strip of glue is applied onto one the two wings (14).

14. A packing paper according to claim 13, wherein said wing which carries the strip of glue is the shortest of two asymmetric wings.

15. A packing paper according to claim 12, wherein said strip of glue is protected by a layer of material to be removed when it comes to being used.

16. Traditional packing papers wherein, on the surface of which, there is applied an either continuous or discontinuous strip of glue of the removable type possibly protected by a protective layer to be removed when they come to being used.

17. Packing papers according to claims 1-15 in the form of pre-cut sheets of the required measure.

18. Packing papers according to claims 1-15 in the form of rolls of any width and length.

19. Packing papers according to claim 16, wherein the roll is formed by pre-cut sheets to be torn off when they come to being used.

20. Packing papers according to claims 1-19, wherein the transparent polymeric material sheet consists of a sheet of either degradable or biodegradable polymer.

21. Packing papers according to claim 20, wherein said either degradable or biodegradable material polymer is chosen from the polylactic-acid-based, or starch-based, or PHA-based polymers.

22. Packing papers according to claim 21, wherein said polymers are chosen from:
PLA^{©}, MaterBi^{©}, Biomer^{©} or Biopol^{©}.

23. Packing papers according to claims 20-22, wherein the opaque layer is also formed by biodegradable material.

24. Packing papers according to claim 23, wherein said biodegradable material is paper or dry paper (AIR-LAID).
